Europäisches Patentamt

European Patent Office

Office européen des brevets

(19)

(11) Veröffentlichungsnummer: **0 204 123**
**B1**

(12) **EUROPÄISCHE PATENTSCHRIFT**

(45) Veröffentlichungstag der Patentschrift: 27.06.90

(51) Int. Cl.⁵: **C 08 G 69/16**

(21) Anmeldenummer: **86105640.6**

(22) Anmeldetag: **23.04.86**

(54) **Verfahren und Vorrichtung zur Herstellung von polycaprolactamhaltigen Formmassen.**

(30) Priorität: **08.05.85 DE 3516434**

(43) Veröffentlichungstag der Anmeldung:
**10.12.86 Patentblatt 86/50**

(45) Bekanntmachung des Hinweises auf die
Patenterteilung:
**27.06.90 Patentblatt 90/26**

(84) Benannte Vertragsstaaten:
**BE CH DE FR GB IT LI NL SE**

(56) Entgegenhaltungen:
**DD-A- 4 735**

(73) Patentinhaber: **Dr. Illing GmbH + Co. KG**
**Makromoleculare und Pharmazeutische Chemie**
**Warthweg 14**
**D-6114 Gross-Umstadt (DE)**

(72) Erfinder: **Illing, Gerhard, Dr., Dipl.-Chem.**
**Warthweg 14**
**D-6114 Gross-Umstadt (DE)**

(74) Vertreter: **Schnabel, Hartmut, Dr.-Ing.**
**Am Feldrain 13**
**D-6940 Weinheim (DE)**

Courier Press, Leamington Spa, England.

EP 0 204 123 B1

# EP 0 204 123 B1

**Beschreibung**

Die Erfindung betrifft ein Verfahren und eine Vorrichtung zur Herstellung thermoplastischer, caprolactamhaltiger Formmassen unter hydrolytischer Polymerisation von Caprolactam im Autoklaven bei Drücken bis 20 bar und Temperaturen bis mind. 240°C in Gegenwart von Wasser und einer schwachen Säure, wonach die geschmolzene Masse aus dem Autoklaven in einen unter Vakuum stehenden Zwischenbehälter überführt wird zur Weiterpolymerisation und zum Entfernen flüchtiger Bestandteile wie Wasser, monomeren Caprolactam und Oligomeren.

Vorgenannte Verfahrensschritte sind aus der DD—PS 4 735 bekannt geworden, die ein Verfahren zur Herstellung linearer Polyamide betrifft in zwei diskontinuierlichen Stufen. Eine Extrusion bzw. eine Verarbeitung zu Formmassen ist nicht vorgesehen.

Polyamid-Formmassen werden normalerweise so hergestellt: In der ersten Stufe wird das Caprolactam aufgeschmolzen und entweder vollkontinuierlich in einem VK-Rohr polymerisiert oder diskontinuierlich in einem Autoklaven, wobei andere Polyamidbildner, beispielsweise Laurinlactam, Adipinsäure bzw. Sebazinsäure und die äquivalente Menge Hexamethylendiamin zugesetzt werden. Das caprolactamhaltige Monomerengemisch wird dabei unter Stickstoffatmosphäre auf 220 bis 280°C erhitzt, wobei der Druck bis 20 bar ansteigen kann. Nach 6 bis 8 Stunden wird die 220 bis 250°C heisse Polyamidschmelze strangförmig ausgepresst, abgeschreckt und granuliert. Das so erhaltene polycaprolactamhaltige Rohpolymerisat enthält 10 bis 11% monomeres Caprolactam bezogen auf die Gesamtmenge von polymerem Caprolactam. Durch Waschen des Polymerisates mit der 3- bis 10-fachen Menge heissen Wassers, bezogen auf das Polyamid, werden die monomeren und niedermolekularen und oligomeren Anteile extrahiert. Das mit Feuchtigkeit gesättigte Rohpolymerisat wird anschließend getrocknet.

Die Energiebilanz dieser u.a. vorbekannter Mehrstufenverfahren ist sehr ungünstig, wie im folgenden gezeigt: Für das Aufschmelzen und Erhitzen von 1 kg Caprolactam auf diese Temperatur benötigt man etwa 300 kcal. Bei der Polymerisation wird eine Reaktionswärme von ca. 100 kcal/kg frei, sodass für die Polymerisation etwa 200 kcal/kg Caprolactam erforderlich sind.

Für die Extraktion von 1000 kg Polycaprolactam benötigt man in einem energiesparenden Gegenstromprozess 2800 l kochend-heisses Wasser. Dabei wird das zu extrahierende Polycaprolactam zuerst mit einer caprolactamhaltigen Waschlauge und zum Schluß mit reinem Wasser behandelt. Für das Erhitzen dieser Wassermenge von 12 auf 100°C braucht man 88 kcal/l, das sind 0,10234 kWh $\times$ 2800 = 286,5 kWh. Für die Rückgewinnung des Caprolactams muß die wässrige Lösung destilliert werden. Dafür braucht man 2000 kWh, das errechnet sich wie folgt: die Verfampfungswärme von 1 kg Wasser beträgt 539 kcal = 626,8 kWh $\times$ 2800 = 1755 kWh. Für die Rückkülung des destillierten Wassers von 100°C auf 25°C braucht man entweder kostbares Frischwasser oder weitere 75 kcal $\times$ 2800 l = 244 kWh und für die Destillation von 100 kg Caprolactam bei 12 bis 15 hPa im Dünnschichtverdempfer weitere 35 kWh, so dass für das Waschen und Extrahieren von 1000 kg polycaprolactamhaltigem Rohpolymerisat, für die Destillation des lactamhaltigen Wassers und des Caprolactams insgesamt 2500 bis 2800 kWh erforderlich sind, je nach Größe der Wärmeverluste durch Abstrahlung. Ohne Anwendung des Gegenstromprinzipes bei der Extraktion ist der Energieverbrauch zwei bis drei mal höher. (vergl. Kunststoffhandbuch, München 1966, Band VI, S. 190 bis 194; DE—PS—25 03 308).

Nach der Extraktion ist weitere Energie für die Trocknung des Granulats erforderlich. Am wirtschaftlichsten geschieht dies in einem Vakuumtrockner innerhalb von 36 Stunden bei 70 bis 90°C. Für die Trocknung von 1000 kg Polyamid sind dazu mindestens 270 kWh erforderlich, denn für die Verdampfung des Wassers benötigt man 539 kcal/kg = 0,63 kWh/kg. Das gewaschene und vorgetrocknete Polyamid enthält etwa 14% Wasser, 1000 kg enthalten demnach 140 kg Wasser, so daß für die Trocknung auf einen Wassergehalt unter 0,1% 140 $\times$ 0,63 = 88,2 kWh erforderlich sind. Dazu kommt die Antriebsenergie für den Vakuumtaumeltrockner, wofür mindestens 3 kWh/1000 kg Polyamid $\times$ 36 Stunden = 108 kWh benötigt werden.

Für die Vakuumpumpe sind weitere 36 $\times$ 2 kWh = 72 kWh/1000 kg notwendig. Das ergibt insgesamt 268 kWh, effktiv sind es 280 bis 300 kWh durch Wärmeverluste und Abstrahlung. Um eine verkaufsfähige caprolactamhaltige, thermoplastische Formmasse zu erhalten, muß das extrahierte und getrocknete Polyamid in einem Extruder aufgeschmolzen werden, um Pigmente, Additive und ggf. Füllstoffe einzuarbeiten. Für diesen Prozeß werden aus Erfahrung etwa 300 bis 380 kWh/1000 kg Polyamid 6 Formmasse an Energie benötigt. Dieser Wert errechnet sich aus der Schmelzwärme für Polyamid 6 = 0,019445 kWh/kg und einer Heiz- und Antriebsleistung des Extruders von 280 bis 300 kWh/Tonne Polyamid. Pro Tonne Endprodukt müssen also nach dem herkömmlichen Verfahren insgesamt etwa 3050 bis 3460 kWh/1000 kg Polyamid 6 aufgewendet werden.

In Einzelfällen wurde bereits versucht, diesen Mehrstufenprozeß unter Energieeinsparung abzukürzen (vgl. EP—PS—0005 466). Dabei ist schon daran gedacht worden, dem VK-Rohr einen Doppelwellenextruder nachzuschalten und das Verfahren kontinuierlich zu gestalten. Der Extruder wird jedoch lediglich als Schneckenverdampfer in Alternative zu üblichen Dünnschichtverdampfern vorgeschlagen zur Entgasung. An weitere Möglichkeiten ist nicht gedacht. Auch erlaubt die dort vorgesehene Anwendung eines VK-Rohres keine Herstellung von Varianten, sondern ist beschränkt auf ein reines Polycaprolactam mit relativ niedriger Schmelzviskosität. Diese Massen sind für die Herstellung von Monofilen, aber nicht zur Herstellung von hochschlagfesten oder verstärkten Spritzguß-Formmassen geeignet.

**EP 0 204 123 B1**

Entsprechendes gilt für das Verfahren nach der US—PS—4 310 659, das für die Herstellung von Nylon-Teppichfasern vorgesehen ist. Hier wird das energieaufwendige Auswaschen des Polymerisats mit Wasser ebenfalls vermieden und statt dessen ein Dünnschichtverdampfer eingesetzt. Die Reaktoren sind sämtlich in Serie geschaltet, was bei den sehr unterschiedlichen Verweilzeiten problematisch erscheint. Geeignete Möglichkeiten, in der Endphase die Prozeßführung auf verschiedene Produktqualitäten und -Typen einzustellen, sind nicht beschrieben.

Der vorliegenden Erfindung liegt die Aufgabe zugrunde, ausgehend von dem eingangs genannten Verfahren unter möglichst großer Energieeinsparung ohne Wiederaufschmelzen und ohne Extraktion der Monomeren mit Wasser in einem quasi-kontinuierlichen Prozeß eine Palette verschiedenartiger fertig konfektionierter Spritzgußmassen herzustellen, einschließlich einer hierzu geeigneten Fabrikationseinrichtung.

Die vorgenannte Aufgabe wird im Falle des erfindungsgemäßen Verfahrens dadurch gelöst, daß die Polymerisation in der Hauptstufe diskontinuierlich in mindestens zwei parallel geschalteten Autoklaven mit Rühreinrichtung bei Temperaturen von 220 bis 280°C durchgeführt wird, die den Zwischenbehälter abwechselnd quasi-kontinuierlich beschicken, wonach die Masse kontinuierlich aus dem Zwischenbehälter in einen mehrwelligen Extruder mit unterschiedlich temperierbaren, segmentierten Schnecken- und Gehäuseteilen gelangt und dort mittels erhöhter Temperatur und Unterdruck auf den gewünschten Polymerisationsgrad und Monomerengehalt gebracht und in einem zweiten, mit einem eigenen, eine höhere Drehzahl ermöglichenden Antrieb ausgerüsteten Bereich des Extruders mit verschiedenen Zuschlagstoffen, wie Gleitmitteln, Hitzestabilisatoren, Farb-, Füll- und Verstärkungsstoffen, Weichmachern und Elastifizierungsmitteln versehen wird, wonach eine weitere Entgasung im Endbereich des Extruders erfolgt und die Masse sodann ausgepresst und ggf. granuiert wird.

Weitere vorteilhafte Varianten des erfindungsgemäßen Verfahrens sind in Unteransprüchen gekennzeichnet. Danach stellt sich das erfindungsgemäße Verfahren einschließlich Energiebilanz wie folgt dar: Das zu polymerisierende caprolactamhaltige Monomerengemisch wird in einem Rührautoklaven polymerisiert, wofür, wie in der Einleitung beschrieben, etwa 200 kcal für die Polymerisation von 1 kg Caprolactam benötigt werden. Nach einer Polymerisationszeit von 6 bis 8 h wird die 220 bis 280°C heisse Polyamidschmelze über einen unter Vakuum stehenden Zwischenkessel in einen Extruder gepumpt, wobei 8 bis 9% des Caprolactams bezogen auf die zugeführte Menge an Polycaprolactam im Vakuum ausgegast werden. Der hieße Caprolactamdampf wird kondensiert und zurückgewonnen. Der Energieaufwand ist vernachlässigbar gering. Beim Durchgang durch den Extruder werden der hießen Polyamidschmelze alle Farbstoffe, Additive, Verstärkungsmittel, Masterbatches, Modifizierungsmittel usw. zugesetzt. Damit erhält man in einem quasi-kontinuierlichen Verfahren eingefärbte und modifizierte polycaprolactamhaltige, thermoplastische Formmassen. Gegenüber den bekannten und bisher technisch durchgeführten Verfahren zur Herstellung dieser Massen entfällt das Waschen und Extrahieren, das Trocknen, Wiederaufschmelzen und die Wiederaufarbeitung des Extraktionswassers. Das neue Verfahren benötigt für die Polymerisation 200 kcal/kg Caprolactam = 230 kWh/1000 kg Polyamid 6 und für die Extrusion einschließlich der Vakuumentlactamisierung und Granulierung weitere 150 bis 200 kWh/1000 kg Polyamidformmasse, das sind 380 bis 430 kWh/1000 kg Formmasse. Effektiv benötigt man für das neue Verfahren 500 bis 600 kWh zur Gewinnung von 1000 kg Formmasse. Das ergibt eine Gesamtenergieeinsparung von mindestens 2500 kWh/1000 kg gegenüber dem bischerigen Verfahren durch Einsparung der Aufwendungen für das Extrahieren und für die Rückgewinnung des Caprolactams sowie für die Trocknung und für das Wiederaufschmelzen. Ein weiterer Vorteil des erfindungsgemäßen Verfahrens ist die Möglichkeit, caprolactamhaltige thermoplastische Formmassen mit einem bestimmten und erwünschten Monomerengehalt zu fertigen. Nach dem bisherigen Waschverfahren erhielt man Formmassen, die praktisch keine Monomeren mehr enthielten. Der Gehalt lag deutlich unter 1%, in der Regel unter 0,5% nach dem Wiederaufschmelzen im Extruder. Nach dem erfindungsgemäßen Verfahren können Formmassen mit einem erwünschten Gehalt an Monomeren, der zwischen 0,5 und 10%, vornehmlich zwischen 1 und 8% liegt, hergstellt werden.

Bei einem Monomerengehalt von 1,5 bis 3% ist die Trockenschlagzägigkeit deutlich erhöht, ohne daß das Produkt Auschwitzungen von Caprolactam durch Wasseraufnahme zeigt. Höhere Lactamgehalte verbessern zwar die Schlagzähigkeit weiter, jedoch sind diese Produkte nur für die Anwendung in feuchter Umgebung brauchbar, bei der das ausgeblühte Caprolactam aufgelöst und durch Wassereinlagerung ersetzt wird.

Die nach dem erfindungsgemäßen Verfahren hergestellten und beschriebenen Formmassen besitzen ein höheres Niveau an physikalischen Eigenschaften, insbesondere weil keine thermische Schädigung durch ein Wiederaufschmelzen eintritt, wie es nach dem bisher bekannten Mehrstufenprozess notwendig war.

Gegenstand der Erfindung ist auch eine Vorrichtung bzw. Anlage zur Durchführung des vorgeschriebenen erfindungsgemäßen Verfahrens zum Herstellen thermoplastischer caprolactamhaltiger Formmassen unter hydrolytischer Polymerisation von Caprolactam, insbes. zur Durchführung des Verfahrens nach einem der Ansprüche 1 bis 5, wobei einem beheizbaren Druckbehälter ein beheiz- und evakuierbarer Behälter zur Fortführung der Reaktion unter Entfernung flüchtiger Bestandteile nachgeschaltet ist.

Die obigen gegenständlichen Merkmale sind aus der bereits genannten DD—PS—4 735 bekannt. Es ist

3

dort schon an den Vorteil gedacht, die Reaktionszeit im Autoklaven zu verkürzen, indem die Reaktionsmasse in einer zweiten Reaktionsstufe in eine sogenannte Vorlage, d.h. einen Behälter, überführt wird, in dem die Reaktion zu Ende geht und aus dem alle flüchtigen Bestandteile, auch Wasser, unter Vakuum abgezogen werden.

Diese Vorrichtung ist allerdings nur für diskontinuierlichen Betrieb und Labormaßstab geeignet. Es fehlt auch die Möglichkeit, flüchtige Stoffe, zumindest Wasser, schon in der ersten Reaktionsstufe zu entfernen, sodaß die Reaktion mit schlechter Ausbeute an höhermolekularen Polyamiden verläuft. Die Produkte scheinen allenfalls für den Spinnprozeß geeignet zu sein.

Diese Nachteile überwindet die erfindungsgemäße Vorrichtung, die insbes. eine quasi-kontinuierliche Herstellung von Polyamid-Formmassen erlaubt. Sie ist gekennzeichnet durch

(a) mindestens zwei parallelgeschaltete beheizbare Rührautoklaven;

(b) einen beheiz- und evakuierbaren Zwischenbehälter, der abwechselnd vom einen oder anderen Rührautoklaven beaufschlagbar ist und ausgangsseitig mit einer Fördereinrichtung versehen ist, die in einen Extruder mündet;

(c) einen Schneckenextruder, der aus zwei Abschnitten besteht, wovon jeder mit mindestens zwei Schneckenwellen, Schnecken- und Knetsegmenten sowie segmentierten beheizbaren Gehäuseteilen ausgestattet ist und einen eigenen Antrieb aufweist, wobei der Antrieb des zweiten Abschnittes stärker ausgelegt sein kann und eine höhere Drehzahl erlaubt.

Die Parallelschaltung der Rührautoklaven, die abwechselnd den Zwischenbehälter beafuschlagen, und der zweiteilige Schneckenextruder mit getrennten Antrieben ermöglichen ein flexibles Verfahren, das ohne Verweilzeitprobleme ein breites Spektrum unterschiedlich konfektionierter Spritzgießmassen einschließlich glasfaserverstärkter Massen herzustellen gestattet.

Weitere vorteilhafte Ausführungsformen der Vorrichtung sind in Unteransprüchen gekennzeichnet.

Im folgenden soll die Erfindung anhand von Ausführungsbeispielen, aus denen sich weitere Vorteile und Merkmale der Erfindung entnehmen lassen, näher erläutert werden. In den dazugehörigen Zeichnungen ist eine Vorrichtung zur Durchführung des Verfahrens dargestellt. Im einzelnen zeigt:

Fig. 1 Die Gesamtanlage;

Fig. 2 einen im Rahmen der Gesamtanlage verwendbaren, mehrwelligen Winkel-Extruder;

Fig. 3 die perspektivische Ansicht eines einzelnen Gehäusesegmentes;

Fig. 4 einen Schnitt durch ein Gehäusesegment gem. der in Fig. 3 gezeigten Schnittlinie X—X;

Fig. 5 Doppelschneckensegmente mit mittiger Knetzone.

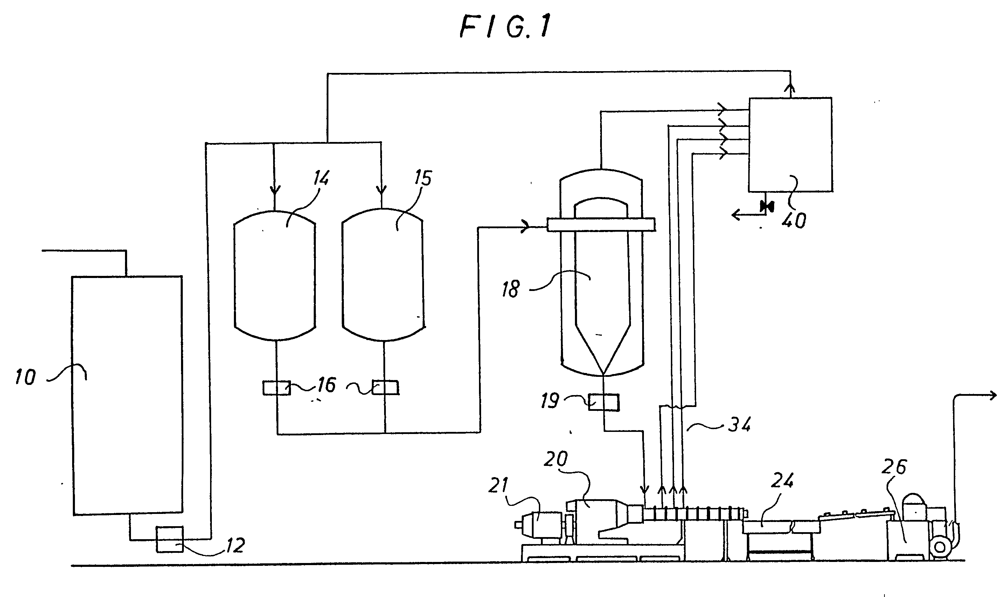

Die Gesamtanlage gemäß Fig. 1 enthält einen Vorratskessel 10 für Caprolactam. Das Caprolactam wird schmelzflüssig — im allgemeinen mit einer Temperatur von 70 bis 80°C — angeliefert und im Vorratsbehälter 10 bei dieser Temperatur gelagert. Eine bestimmte vorgegebene Menge wird mit der Dosierpumpe 12 in einen der Rührautoklaven 14 bzw. 15 gepumpt. Weitere Polyamidbildner können auf getrenntem Wege dem Rührautoklaven 14 bzw. 15 zugeführt werden, sofern die Herstellung von Copolymeren, Pfropfpolymerisaten oder Sequenzpolymeren beabsichtigt ist. Die Rührautoklaven sind bis zu einer Temperatur von 340°C beheizbar. Die Polymerisation wird nach einem vorgesehenen Programm entweder von Hand oder automatisch gesteuert.

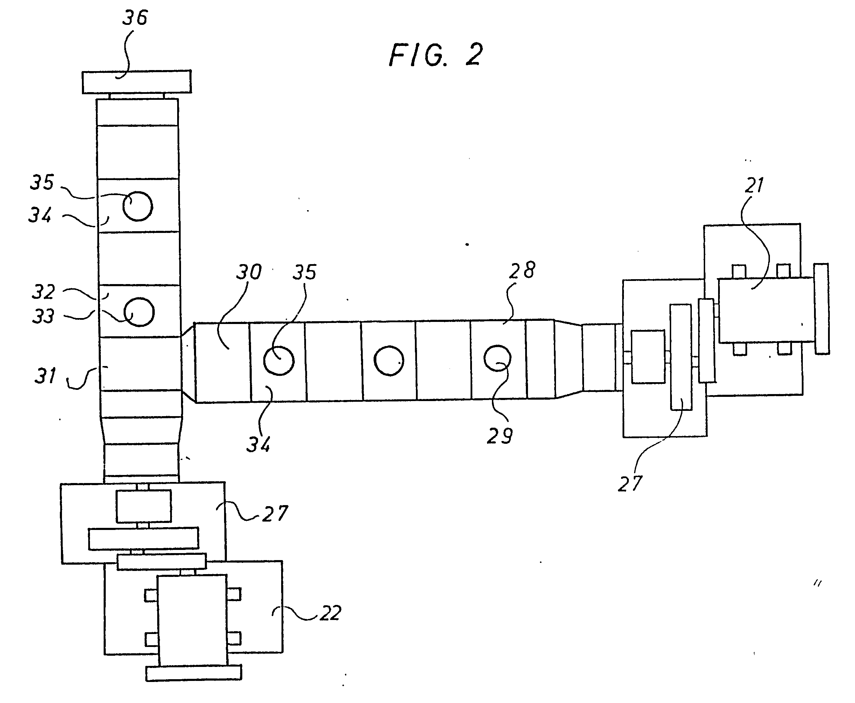

Das Rohpolymerisat wird über die Austragspumpe 16 in den Zwischenbehälter 18 gepumpt, der unter Vakuum steht. Hier findet eine Nachkondensation statt, weil Wasser und Caprolactam und Oligomere teilweise entfernt werden. Die erfindungsgemäße Verwendung eines Zwischenbehälters 18 spart Verweilzeit in den aufwendigen Rührautoklaven 14 bzw. 15 und erlaubt einen erhöhten Durchsatz pro Investitionseinheit. Von hier wird die vorevakuierte Schmelze einem mehrwelligen Extruder 20 zugeführt, der entweder 1 oder 2 getrennte Antriebe 21, 22 (Fig. 2) besitzen kann. In dem Extruder 20 werden das monomere Caprolactam und die im Vakuum bei 220 bis 280°C flüchtigen niedermolekularen Anteile entfernt. Der Monomerengehalt kann eingestellt werden über die Schneckendrehzahl, durch die Verweilzeit in den Entgasungszonen, durch die Zahl der Entgasungszonen und schließlich durch das Anlegen bestimmter Unterdrucke. In dem Extruder 20 werden alle notwendigen Zuschlagstoffe wie Gleitmittel, Kristallisationsbeschleuniger, Entformungshilfsmittel, Hitzestabilisatoren und andere Additive, ferner Pigmente, Weichmacher, Füllstoffe wie mineralische Pulver, Glaskugeln oder Glasfasern zugesetzt. Es können auch andere Polymere zur Modifizierung zugeführt werden. Die Polymerschmelze wird mit allen Zuschlagstoffen intensiv verknetet und homogenisiert. Die Schmelze wird strangförmig ausgepreßt, kurz im Wassebad 24 abgeschreckt, um Granulator 26 granuliert und in ein nicht dargestelltes Trocken- und Abfüllsilo gefördert. Das im Vakuum durch Entgasungsstutzen 34 abgezogene monomere Caprolactam und die niedermolekularen Anteile (Oligomere) werden in einem Kondensator 40 niedergeschlagen und dem Prozeß wieder zugeführt.

Fig. 2 zeigt die Draufsicht eines mehrwelligen Extruders mit 2 Antrieben 21, 22. Zwischen dem Antrieb 21, 22 und den Gehäusesegmenten ist jeweils 1 Getriebe 27 angeordnet. Der Extruder ist im Baukastenprinzip aufgebaut mit Gehäusesegmenten, die entweder geschlossen sind, z.B. 30 oder Entgasungs- bzw. Einfüllöffnungen aufweisen, wie die Segmente 28, 32, 34. In das Gehäusesegment 28 wird durch die Einfüllöffnung 29 die Polymerschmelze aus dem Zwischenbehälter 18 eingebracht. In Gehäusesegmenten 34 mit den Öffnungen 35 erfolgt die Entgasung. In den Gehäusesegmenten 30 und 31 erfolgt die Übergabe in den 2. Extruderabschnitt, der einen separaten Antrieb 22 besitzt. Dieser Extruderabschnitt ist unter einem Winkel, vorzugsweise rechtwinklig, an den 1. Abschnitt angeflanscht. Er

4

kann mit einer unterschliedlichen Schneckendrehzahl betrieben werden. In dem Gehäusesegment 32 können durch die Einfüllöffnung 33 Füllstoffe etc., wie oben genannt, zugeführt werden. Durch den Düsenspritzkopf 36 wird die Schmelze strangförmig ausgepreßt.

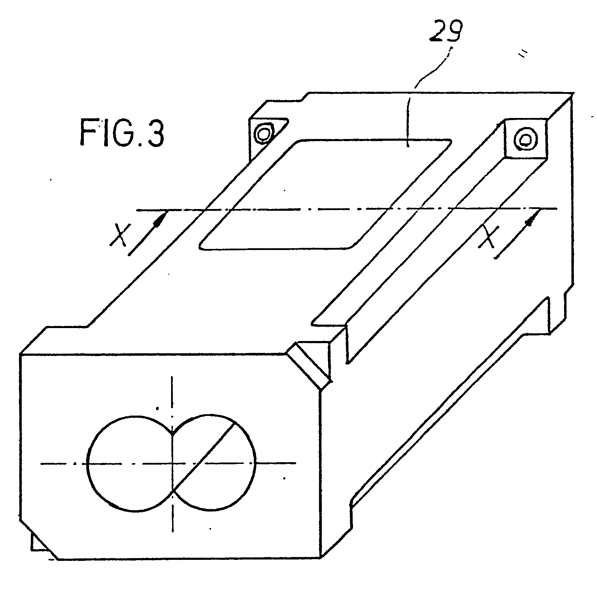

In Fig. 3 ist ein Gehäusesegment mit einer Einfüllöffnung 29, wie es in dem Extruder 20 verwendet wird, perspektivisch dargestellt.

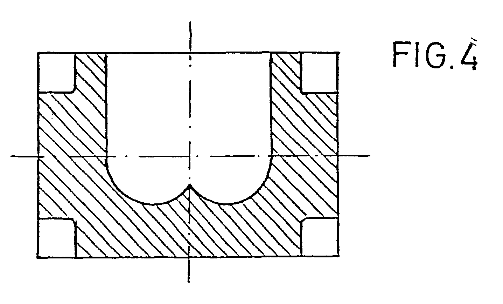

Fig. 4 zeigt den Querschnitt durch das in Fig. 3 dargestellte Gehäusesegment 28 entlang der eingezeichneten Schnittlinie X—X.

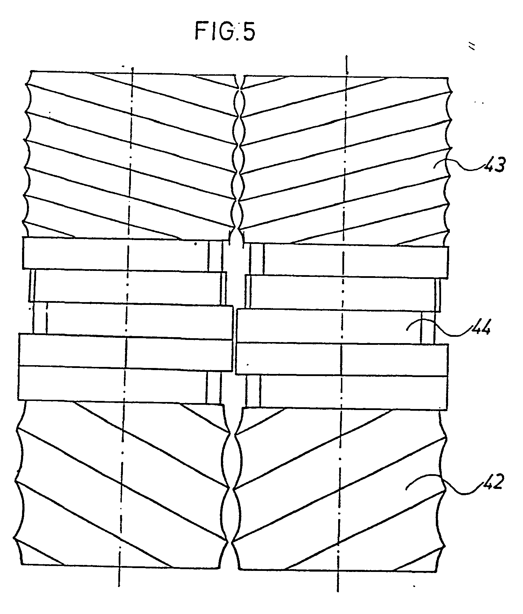

In Fig. 5 ist ein Ausschnitt aus der Doppelschnecke des Extruders 20 dargestellt. Er zeigt Schneckensegmente 42, 43 mit verschiedener Gangsteigung zur Förderung der Polymerschmelze und einen Knetblock 44.

Für das erfindungsgemäße Verfahren zur Herstellung thermoplastischer Formmassen werden entweder reines ε-Caprolactam oder Gemische aus ε-Caprolactam und anderen Lactamen wie Capryllactam, Önanthlactam oder Laurinlactam eingesetzt, weiterhin ε-Caprolactam mit anderen Polyamid-bildnern wie 11-Amino-Undecansäure oder Diaminen wie Hexamethylendiamin, Decamethylendiamin, Dodekamethylendiamin, Ethylendiamin, 2-Methylhexamethylendiamin, Trimethyl-hexamethylendiamin, 1,4-Xylylendiamin, Bis(4-amino-cyclohexyl)methan, 1,4-Diaminocyclohexan mit der äquivalenten Menge an Dicarbonsäure wie Adipinsäure, Korksäure, Azelainsäure, Sebazinsäure, Decamethylen-dicarbonsäure, Heptadecandicarbonsäure 2,2,4- bzw. 2,4,4-Trimethyladipinsäure, Isophthalsäure, Terephthalsäure und schließlich ε-Caprolactam mit oder ohne die genannten Polyamidbildner und Oligomeren oder polymeren Substanzen, die mit ε-Caprolactam eine Pfropfreaktion eingehen, wie z.B. Copolymere des Ethylens mit Vinylacetat oder Acrylsäureestern, ferner Polyurethane gewonnen aus Di- oder Tri-isocyanaten und Di-, bzw. Polyolen wie Hexamethylendiisocyanat, Toluylen-2,4- oder 2,6-diisocyanat, Triphenylmethan-4,4',4''-triisocyanat und Butandiol-1,4, Hexandiol-1,6, Polytetrahydrofuran, Polypropylenglykol oder lineare und verzweigte Polyesteralkohole gewonnen aus Adipinsäure und Phthalsäure mit einem Überschuß von Diolen und Triolen sowie Polyamide oder Copolyamide.

## Beispiel 1

4.000 kg geschmolzenes, 75 bis 80°C hießes Caprolactam wird aus dem Vorratsbehälter 10 in einen 5000 Liter beheizbaren und mit Stickstoff gespülten Rührautoklaven 14 übergepumpt. Dazu gibt man 200 Liter Wasser, das 10% Caprolactam (20 kg) und 0,3% Essigsäure (0,6 kg) enthält. Unter Rühren wird 5 bar Stickstoff aufgepreßt und der Ansatz innerhalb von 4 Stunden auf 260 bis 265°C erhitzt, dabei steigt der Druck auf 12 bis 18 bar an. Dieser Druck und Temperatur werden anschließend 2 Stunden beibehalten, danach wird der Druck durch langsames Entspannen innerhalb von 2 bis 4 Stunden auf 0 bar reduziert. Die Produkttemperatur wird dabei auf 235 bis 240°C zurückgenommen. Anschließend wird die Schmelze in einen Zwischenbehälter 18 gepumpt, der unter einem Vakuum von 36 bis 60 hPa steht. Die von flüchtigen Anteilen weitgehend befreite Schmelze gelangt über eine Dosierpumpe 19 in einen zweiwelligen Extruder 20 mit verschiedenen Schnecken- und Gehäusesegmenten. Je nach der Schneckendrehzahl, der Zahl der Entgasungsöffnungen und dem eingestellten Unterdruck kann man ein Polycaprolactam mit einer relativen Lösungsviskosität (die rel. Lösungsviskosität wird an 1 proz. Lösungen von Polycaprolactam in 90 proz. Ameisensäure bei 20°C nach DIN 53 727 bestimmt) von 2,3 bis 4,2 und einem Gehalt an monomerem und dimerem Caprolactam von 0,4 bis 10% erhalten werden. Der Anteil an monomerem und oligomerem Caprolactam wird durch die Extraktion mit Methanol nach DIN 53 738 bestimmt. Die aus der Polymerschmelze durch das Vakuum entfernten niedermolekularen Anteile werden in einem Kondensator 40 niedergeschlagen und dem nächsten Ansatz wieder zugeführt. Die Extraktgehalte, die relativen Lösungsviskositäten und einige charakteristische Eigenschaftswerté sind in Tab. 1 aufgeführt.

Tabelle 1.: Eigenschaftswerte von Polyamid 6 natur mit verschiedenen Gehalten an monomeren und oligomeren des Caprolactams ( Feuchtig- keitsgehalt der Proben: 0,08 bis 0,09 % ) Mittelwerte, gemessen an spritzfrischen Prüfkörpern nach 24-stündiger Lagerung bei 23 °C .

| | | | | | | |
|---|---|---|---|---|---|---|
| Extrahierbare Anteile ( % ) | 0,48 | 1,42 | 2,31 | 3,23 | 4,15 | 4,95 |
| K- Wert DIN 53727 | 77,2 | 75,9 | 75,3 | 74,6 | 73,8 | 73,0 |
| rel. Lösungs- viskosität | 3,01 | 2,90 | 2,85 | 2,80 | 2,75 | 2,69 |
| Zugfestigkeit DIN 53455 ($N/mm^2$) | 70 | 70 | 69 | 66 | 65,5 | 64,6 |
| Reißdehnung DIN 53455 ( % ) | 98 | 138 | 160 | 172 | 185 | 218 |
| Kerbschlagzähig- keit (Lochkerbe d = 3 mm) ($kJ/mm^2$) DIN 53753 | 58 | 69 | 78 | 85 | 82 | 101 |
| E - Modul ( Biegeversuch ) DIN 53457 ($N/mm^2$) | 2800 | 2680 | 2600 | 2550 | 2420 | 2330 |

Beispiel 1A

Es wird zunächst wie in Beispiel 1 verfahren. In die entlactamisierte Polycaprolactamschmelze werden mittels synchron geschalteter Dosierbandwaagen in das Gehäuseteil 32 des Extruders mit einer Öffnung 33 nach oben und einer seitlichen Tasche (s. Fig. 4) alle erforderlichen Zuschlagstoffe wie Gleitmittel, Hitzestablisatoren, Pigmente, Füllstoffe wie Glaskugeln, Glasfasern, mineralische Füllstoffe gegebenenfalls Polymerisate, die zu einer Legierungsbildung fähig sind, gezielt zugesetzt.

Die dabei erhaltenen polycaprolactamhaltigen Formmassen sind in Tab. 1A aufgeführt.

TABELLE 1A. Eigenschaften von polycaprolactamhaltigen Formmassen mit verschiedenen Füllstoffen verstärkt

| EIGENSCHAFT / PRÜFVORSCHRIFT | DIMENSION | PRODUKT | | |
|---|---|---|---|---|
| | | POLYCAPROLACTAM mit 1,56 % extrahierbaren Anteilen und Zusatz von | | |
| | | 25 % Glasfasern | 40 % Kohlefasern | 30 % Kaolin |
| Streckspannung DIN 53 455 | N/mm$^2$ | 150 - 160 | 210 - 230 | 75 - 80 |
| Reißdehnung DIN 53 455 | % | 5 - 7 | 5 - 6 | 8 - 10 |
| E-Modul (Biegeversuch) DIN 53 457 | N/mm$^2$ | 6800-7000 | 20000-23000 | 4500-5000 |
| Schlagzähig-keit DIN 53 453 | kJ/m$^2$ | 45 - 55 | 35 - 45 | nicht gebr. |
| Kugeldruck-härte DIN 53 456 | N/mm$^2$ | 105 - 110 | 225 - 235 | 120 - 125 |
| Dichte DIN 53 470 | g/cm$^3$ | 1,30 | 1,35 | 1,36 |
| Viskositätszahl DIN 53 727 | ml/g | 140 - 160 | 145 - 160 | 140 - 165 |

Beispiel 2

In einem 5000 l beheizbarem Druckkessel werden 1200 kg eines Salzes aus äquimolaren Mengen von Adipinsäure und Hexamethylendiamin (AH-Salz), 800 kg Wasser und 1200 kg Caprolactam sowie 2 Liter 50 proz. wässrige Essigsäure gegeben. Der Druckkessel wird verschlossen und mit Stickstoff gespült, dann werden 2 bar Stickstoff aufgepreßt und der Ansatz innerhalb von 4 Stunden auf 210 bis 220°C erhitzt. Der Druck steigt auf 16 bis 18 bar. Sobald das Reaktionsgemisch vollständig aufgeschmolzen ist, wird das Rührwerk eingeschaltet. Druck und Temperatur werden 1 bis 2 Stunden konstant gehalten, damit sich ein Vorkondensat bilden kann. Dann wird die Temperatur auf 275°C gesteigert und der Druck durch Öffnen des Entspannungsventils auf 16 bis 18 bar gehalten, wobei das Wasser abdestilliert. Danach wird der Druck innerhalb von 1 bis 2 Stunden auf 1 bar reduziert und die Temperatur von 275 auf 245°C gesenkt. Die entgaste Schmelze wird, wird wie in Beispiel 1 beschreiben, in einen Zwischenbehälter gepumpt, durch Anlegen eines Vakuums von 40 bis 60 hPa bringt man die Schmelzviskosität auf ein erwüschtes Maß. (Die Schmelzviskosität wird mit einem Rotationsviskosimeter ermittelt). Die Copolyamidschmelze wird in einen 2-welligen Extruder gepumpt. Dort werden in einer 1. Entgasungsstufe bei 55 bis 60 hPa und in einer 2. Entgasungsstufe bei 30 bis 35 hPa bei 250 bis 260°C Produkttemperatur die flüchtigen Anteile entfernt und kondensiert. die von Monomeren befreite Schmelze wird im Extruder durch Zudosieren von 3% Farbbatch, 15% Stapelglasseide und 25% eines Aluminiumsilikates zu einer polycaprolactamhaltigen Formmasse verknetet, strangförmig ausgepreßt, abgeschreckt und granuliert. Das dabei erhaltene Produkt hat die in Tab. 2 angegebenen Eigenschaftswerte.

TABELLE 2: Eigenschaften eines Copolyamids, verstärkt mit

15 % Glasfasern und 25 % eines Aluminiumsilikates

| Eigenschaft | Prüfvorschrift | DIMENSION | |
|---|---|---|---|
| Streckspannung | DIN 53455 | N/mm$^2$ | 105 - 110 |
| Reißdehnung | DIN 53455 | % | 5 - 6 |
| E - Modul (Biegeversuch) | DIN 53457 | N/mm$^2$ | 6500 - 6800 |
| Schlagzähigkeit | DIN 53453 | kJ/m$^2$ | 35 - 42 |
| Viskositätszahl | DIN 53727 | ml/g | 140 - 155 |

Beispiel 3

600 kg Polylaurinlactampulver (rel. Lösungsviskosität 1,56) wird in einen 5000 Liter beheizbaren Druckkessel vorgelegt. Dazu werden 2 400 kg geschmolzenes und 75 bis 80°C heißes Caprolactam gegeben, das 12 Liter Wasser und 0,3 kg Propionsäure enthält. Der Autoklav wird geschlossen und gründlich mit Stickstoff gespült. Dann werden 5 bar Stickstoff aufgepreßt und der Ansatz auf 260 bis 265°C erhitzt. Diese Temperatur wird eine Stunde beibhalten. Dann wird das Rührwerk eingeschaltet und bei diesen Reaktionsbedingungen noch 3 Stunden weiter gerührt. Danach wird der Druck durch langsames Entspannen auf 0 bar reduziert und die produkttemperatur auf 225 bis 230°C zurückgenommen. Die Schmelze wird in einen Zwichenbehälter gepumpt, der unter einem Vakuum von 10 bis 15 hPa steht. Die von flüchtigen Anteilen weitgehend befreite Schmelze gelangt über eine Dosierpumpe zunächst in den ersten Abschnitt eines zweiwelligen Extruders, wie er in Fig. 2 dargestellt ist. Die Schmelze wird auf 225 bis 230°C gehalten und durch drei Entgasungszonen von den bei dieser Temperatur flüchtigen Anteilen befreit. Der Unterdruck am Entgasungsstutzen 1 beträgt 55 is 60 hPa, am Entgasungsstutzen 2 35 bis 40 hPa und der Unterdruck am 3. Entgasungsstutzen 10 bis 15 hPa.

Die so entgaste Schmelze wird sodann in einen über Eck angeflanschten 2. Abschnitt des Extruders mit gleichem Schneckendurchmesser, aber mit getrenntem Antrieb gefördert. In dem Gehäuseteil 32 werden 40% Glasfasern zudesiert. Die Schneckendrehzahl ist doppelt so hoch wie im davor angeflanschten Extruderabschnitt, um die Volumenvergrösserung durch die Zuschlagstoffe zu kompensieren. Die restlichen flüchtigen Anteile werden im Gehäusesegment 34 ausgegast. Die glasfaserverstärkte Schmelze des polycaprolactamhaltigen Pfropfpolymerisates wird strangförmig durch den Spriztkopf 36 ausgepresst, abgeschreckt und granuliert. Die Eigenschaftswerte des dabei erhaltenen Produktes sind in Tab. 3 aufgeführt.

TABELLE 3: Eigenschaften eines Copolyamids, verstärkt mit 40 % Glasfasern

| Eigenschaft | Prüfvorschrift | DIMENSION | |
|---|---|---|---|
| Streckspannung | DIN 53455 | N/mm$^2$ | 140 - 150 |
| Reißdehnung | DIN 53455 | % | 5 - 6 |
| E- Modul (Biegeversuch) | DIN 53457 | N/mm$^2$ | 9000 - 9400 |
| Schlagzähigkeit | DIN 53453 | kJ/m$^2$ | 40 - 45 |
| Viskositätszahl | DIN 53727 | ml/g | 180 - 195 |

# EP 0 204 123 B1

## Patentansprüche

1. Verfahren zur Herstellung thermoplastischer caprolactamhaltiger Formmassen unter hydrolytischer Polymerisation von Caprolactam im Autoklaven bei Drücken bis 20 bar und erhöhten Temperaturen in Gegenwart von Wasser und einer schwachen Säure, wonach die geschmolzene Masse aus dem Autoklaven in einen unter Vakuum stehenden Zwischenbehälter überführt wird zur Weiterpolymerisation und zum Entfernen flüchtiger Bestandteile die Wasser, monomerem Caprolactam und Oligomeren, dadurch gekennzeichnet, daß die Polymerisation in der Hauptstufe diskontinuierlich in mindestens zwei parallel geschalteten Autoklaven mit Rühreinrichtung bei Temperaturen von 220 bis 280°C durchgeführt wird, die den Zwischenbehälter abwechselnd quasi-kontinuierlich beschicken, wonach die Masse kontinuerlich aus dem Zwischenbehälter in einen mehrwelligen Extruder mit unterschiedlich temperierbaren, segmentierten Schnecken- und Gehäuseteilen gelangt und dort mittels erhöhter Temperatur und Unterdruck auf den gewünschten Polymerisationsgrad und Monomerengehalt gebracht und in einem zweiten, mit einem eigenen, eine höhere Drehzahl ermölichenden Antrieb ausgerüsteten Bereich des Extruders mit verschiedenen Zuschlagstoffen, wie Gleitmitteln, Hitzestabilisatoren, Farb-, Füll- und Verstärkungsstoffen, Weichmachern und Elastifizierungsmitteln versehen wird, wonach eine weitere Entgasung im Endbereich des Extruders erfolgt und die Masse sodann ausgepresst und ggf. granuliert wird.

2. Verfahren nach Anspruch 1, dadurch gekennzeichnet, daß das bei Unterdruck aus dem Zwischenbehälter und den Entgasungszonen des Extruders abgezogene Caprolactam und die sonstigen bei 220—280°C flüchtigen Oligomeren in einem Kondensator niedergeschlagen und sodann zusammen mit frisch eingesetzem Caprolactam dem Rührautoklaven zugeführt werden.

3. Verfahren nach Anspruch 1 oder 2, gekennzeichnet durch den Zusatz von monomeren oder polymeren Stoffen im Rührautoklaven, welche mit Caprolactam Copolymerisate oder Pfropfpolymerisate bilden, vorzugsweise Polyaurinlactam und/oder Poly-aminoundecan-säure.

4. Verfahren nach einem der Ansprüche 1 bis 3, dadurch gekennzeichnet, daß Blockpfropfpolymerisate bildende Polymerisate der Masse im Extruder zugemischt werden, zorzugsweise Ethylenacrylsäure-copolymere, deren Ester und Salze, ferner Nitrilkautschuk oder Ethylen-propylenkautschuk insbesondere mit Maleinsäureanhydrid modifizierter Ethylenpropylenkautschuk, wonach diese zusammen mit der Masse eine Zone intensiver Knetung durchlaufen.

5. Verfahren nach einem der Ansprüch 1 bis 4, dadurch gekennzeichnet, daß durch Wahl geeigneter Temperaturen die Viskosität der Masse so eingestellt wird, daß deren Förderung durch die verschiedenen Stationen des Prozesses, ohne Verstopfung, Abrisse bzw. Auslaufen gewährleistet ist, einschließlich der Aufrechterhaltung eines Druckes von 5 bis 50 bar am Kopf des Extruders.

6. Vorrichtung zum Herstellen thermoplastischer caprolactamhaltiger Formmassen unter hydrolytischer Polymerisation von Caprolactam, insbes. zur Durchführung des Verfahrens nach einem der Ansprüche 1 bis 5, wobei einem beheizbaren Druckbehälter ein beheiz- und evakuierbarer Behälter zur Fortführung der Reaktion unter Entfernung flüchtiger Bestandteile nachgeschaltet ist, gekennzeichnet durch

a) mindestens zwei parallel geschaltete beheizbare Rührautoklaven (14, 15);

b) einen beheiz- und evakuierbaren Zwischenbehälter (18), der abwechselnd vom einen oder anderen Rührautoklaven (14, 15) beafuschlagbar ist und ausgangsseitig mit einer Fördereinrichtung (19) versehen ist, die in einen Extruder (20) mündet;

c) einen Schneckenextruder (20), der aus zwei Abschnitten besteht, wovon jeder mit mindestens zwei Schneckenwellen, Schnecken- und Knetsegmenten sowie segmentierten beheizbaren Gehäuseteilen (28, 30, 31, 32, 34) ausgestattet ist und einen eigenen Antrieb (21, 22) aufweist, wobei der Antrieb (22) des zweiten Abschnittes stärker ausgelegt sein kann und eine höhere Drehzahl erlaubt.

7. Vorrichtung nach Anspruch 6, gekennzeichnet durch Schneckensegmente (43, 43) von unterschiedlicher Gangsteigung, die eine unterschiedliche Fördergeschwindigkeit ermöglichen, und/oder von unterschiedlicher Spaltbreite, die eine unterschiedliche Knetwirkung ermöglichen.

8. Vorrichtung nach Anspruch 6 oder 7, gekennzeichnet durch die Aufteilung des Extruders in mehrere Gehäusesegmente, welche geschlossen (30) aufklappbar, aufschraubbar, temperierbar und mit seitlichen (31) und/oder zur Förderichtung senkrechten Bohrungen (28) zur Aufnahme der Masse versehen sind, mit Beschickungsöffnungen (29, 33) für Zuschlagstoffe sowie Entgasungsöffnungen (35) mit angeschlossenen Entgasungsstutzen.

9. Vorrichtung nach einem der Ansprüche 6 bis 8, dadurch gekennzeichnet, daß der zweite Extruderabschnitt rechtwinklig zum ersten angeflanscht ist und im vorderen Bereich (32, 33) Aufnahmeorgane für die Zuschlagstoffe enthält und im Endbereich (34, 35) eine letzte Entgasungszone aufweist.

## Revendications

1. Procédé pour préparer des matières thermoplastiques à mouler contenant du caprolactame, par polymérisation hydrolytique de caprolactame dans des autoclaves sous des pression allant jusqu'à 20 bar et à des températures élevées, en présence d'eau et d'un acide faible, après quoi la matière fondue est transférée de l'autoclave dans un récipient intermédiaire mis sous dépression, en vue de la poursuite de la

9

polymérisation et pour éliminer les constituants volatils comme l'eau, le caprolactame monomère et les oligomères, procédé caractérisé en ce que la polymérisation est conduite dans l'étape principale de manière discontinue dans au mins deux autoclaves reliés en parallèle, comportant un dispositif d'agitation, à des températures de 220 à 280°C, qui alimentent de façon quasi-continue et alternativement le récipient intermédiaire, après quoi la matière parvient en continu du récipient intermédiaire dans une extrudeuse à plusieurs arbres et comportant des parties segmentées de vis et d'enveloppe pouvant être tempérées de manière différente et, grâce à une température élevée et à une dépression, cette matière est amenée au degré voulu de polymérisation et à la teneur voulue en monomère et, dans une seconde zone de l'extrudeuse, équipée d'un entraînement propre ou séparé permettant une plus grande vitesse de rotation, cette manière est additionnée de différents additifs comme des lubrifiants, des stabilisants à l'égard de la chaleur, des matières colorantes, de charges et de renforcement, des plastifiants et des agents d'élastification, puis on effectue un autre dégazage dans la zone terminale de l'extrudeuse et la matière est ensuite extrudée et éventuellement granulée.

2. Procédé selon la revendication 1, caractérisé en ce que le caprolactame et les autres oligomères volatils à 220—280°C, retirés sous dépression du récipient intermédiaire et des zones de dégazage de l'extrudeuse, sont précipités dans un condenseur puis acheminés, avec du caprolactame fraîchement introduit, vers l'autoclave comportant un dispositif d'agitation.

3. Procédé selon la revendication 1 ou 2, caractérisé en ce que l'on introduit dans le ou les autoclaves comportant un dispositif d'agitation, des substances monomères ou polymères qui forment avec le caprolactame des copolymères ou des polymères de greffage, avantageusement du polylactame laurique et/ou de l'acide polyaminoundécanoïque.

4. Procédé selon l'une des revendications 1 à 3, caractérisé en ce que l'on incorpore à la matière par mélangeage dans l'extrudeuse des polymères formateurs de polymères séquencés de greffage, avantageusement des copolymères éthylène/acides acryliques, leurs esters et leurs sels, ainsi que du caoutchouc nitrile ou du caoutchouc d'éthylène et de propylène, en particulier du caoutchouc d'éthylène/propylène modifiée par de l'anhydride d'acide maléique, puis ces additifs parcourent, avec la matière traitée, une zone de malaxage intense.

5. Procédé selon l'une des revendications 1 à 4, caractérisé en ce que, grâce au choix de températures convenables, on ajuste la viscosité de la matière de manière à en permettre le déplacement de passage par les diverses stations ou étapes du procédé, sans bouchage, sans rupture ni débordement, ce qui comprend le maintien d'une pression de 5 à 10 bar au niveau de la tête de l'extrudeuse.

6. Appareillage pour préparer des matières thermoplastiques à mouler, contenant du caprolactame, avec polymérisation hydrolytique du caprolactame, en particulier pour la mise en oeuvre du procédé selon l'une des revendications 1 à 5, un récipient pouvant être chauffé et mis sous vide pour la poursuite de la réaction avec enlèvement des constituants volatils étant monté en aval d'un récipient pouvant être chauffé et résistant bien à la pression, appareillage caractérisé en ce qu'il comporte

(a) au moins deux autoclaves (14, 15) montés en parallèle, pouvant être chauffés et comportant chacun un dispositif d'agitation,

(b) un récipient intermédiaire (18) pouvant être chauffé et dans lequel on faire régner une dépression, qui peut être alternativement alimenté par l'un ou l'autre autoclave (14, 15) comportant un dispositif d'agitation et qui est muni à son côté sortie d'un dispositif (19) de transport débouchant dans une extrudeuse (20),

(c) une extrudeuse (20) à vis, consistant en deux zones ou tronçons, dont chacun est équipé d'au moins deux arbres de vis, segments ou zones de vis et de malaxage ainsi que de parties (28, 30, 31, 32, 34) de corps d'enveloppe segmenté pouvant être chauffé et présentant un entraînement propre (21, 22) l'entraînement (22) du second tronçon pouvant être réglé à une valeur plus forte et permettant une vitesse de rotation plus élevée.

7. Appareillage selon la revendication 6, caractérisé en ce qu'il comporte des zones ou segments de vis (42, 43) à pas différents, qui permet une vitesse d'avance différente et/ou à largeur de fente différente permettant une action différente de malaxae.

8. Appareillage selon la revendication 6 ou 7, caractérisé par le fait que l'extrudeuse est subdivisée en plusieurs zones ou segments du corps d'enveloppe qui sont fermés (30), peuvent être ouverts, comportent des vis, peuvent être soumis à tempérage et sont munis d'orifices latéraux (31) et/ou d'orifices (28) perpendiculaires à la direction d'avance pour recevoir la matière, avec des orifices (29, 33) d'alimentation pour l'introduction de l'additif ainsi que des orifices (35) de dégazage équipés de raccords de dégazage.

9. Appareillage selon l'une des revendications 6 à 8, caractérisé en ce que le second tronçon de l'extrudeuse est relié au premier en lui étant perpendiculaire et contient, dans la zone (32, 33) avant des organes de réception des additifs et, dans la zone terminale (34, 35), ils présentent une dernière zone de dégazage.

**Claims**

1. Method for the production of thermoplastic moulding masses containing caprolactam by hydrolytic polymeristion of caprolactam in the autoclave at pressures up to 20 bar and elevated temperatures in the presence of water and a weak acid, whereafter the molten mass is transferred from the autoclave into an intermediate vessel under vacuum for the further polymerisation and the removal of volatile components such as water, monomeric caprolactam and oligomers, characterized in that the polymerisation in the main stage is effected discontinuously and in at least two autoclaves with stirring device at temperatures of 220 to 280°, which autoclaves supply the intermediate vessel alternately, quasi-continuously, whereafter the mass passes continuously out of the intermediate container into a multi-shaft extruder with segmented screw and housing parts capable of being differently regulated in temperature, and is there brought by means of elevated temperature and vacuum to the desired degree of polymerisation and content of monomer, and is provided in a second region of the extruder equipped with a single drive capable of high speeds of rotation with various additives such as lubricants, heat stabilisers, colouring, filler and reinforcing materials, softeners and elasticisers, whereafter a further de-gassing takes place in the end region of the extruder and the mass is then extruded and if desired granulated.

2. Method according to claim 1, characterized in that the caprolactam and the other oligomers volatilising at 220—280° drawn off by vacuum from the intermediate vessel and the de-gassing zone of the extruder are condensed in a condenser and then fed with freshly charged caprolactam to the stirred autoclaves.

3. Method according to claim 1 or 2, characterized by the addition of monomeric or polymeric materials in the stirred autoclaves which form co-polymers or graft polymers with caprolactam, preferably polylauriclactam and/or poly-amino-undecanoic acid.

4. Method according to one of claims 1 to 3, characterized in that polymerisates of the mass forming bulk graft polymerisates are mixed in the extruder, preferably ethyleneacryl acid co-polymers, their esters and salts, further nitrile rubber or ethylene-propylene rubber especially ethylene-propylene rubber modified with maleic acid anhydride, whereafter these are subjected with the mass to a zone of intensive kneading.

5. Method according to one of claims 1 to 4, characterized in that the viscosity of the mass is so adjusted by choice of suitable temperatures that its passage through the various stations of the process is ensured free from plugging, tears or leakage.

6. Apparatus for the production of thermoplastic moulding masses containing caprolactam by hydrolytic polymerisation of caprolactam, especially for carrying out the method according to one of claims 1 to 5, wherein a heated pressure vessel is followed by a heated and evacuated vessel for continuing the reaction with removal of volatile components, characterized by

a) at least two heated stirring autoclaves (14, 15) connected in parallel;

b) a heated intermediate vessel (18) capable of evacuation, which can be served alternately by one or the other stirred autoclave (14, 15) and is provided on the output side with a conveyor device (19) which opens into an extruder (20);

c) a screw extruder (20) which consists of two sections, whereof each is provided with at least two screw shafts, screws and kneading segments as well as segmented housing parts (28, 30, 31, 32, 34) capable of being heated and a single drive wherein the drive (22) of the second section can be made stronger and permits a higher speed of rotation.

7. Apparatus according to claim 6, characterized by screw segments (42, 43) of different pitch, which make possible a different conveyor speed, and/or of different gap width, which make possible a different kneading action.

8. Apparatus according to claim 6 or 7, characterized by the distribution of the extruder in a plurality of housing segments which are closed (30) hinged, screw-up, capable of temperature regulation, provided with side (31) and/or perpendicular to the conveying direction bores (28) for the reception of the mass, with charging openings (29, 33) for additives as well as de-gassing openings (35) with attached de-gassing columns.

9. Apparatus according to one of claims 6 to 8, characterized in that the second extruder section is flanged on to the first at right angles and contains in the front region (32, 33) receiving elements for the additives and in the end region (34, 35) a final de-gassing zone.

# FIG.1

FIG. 2

EP 0 204 123 B1

FIG.3

FIG.4

## FIG.5